# EUROPEAN PATENT APPLICATION

(11) **EP 4 170 049 A1**
(43) Date of publication of application: **26.04.2023**
(21) Application number: 21204175.0
(22) Date of filing: 22.10.2021
(51) Int. Cl.: C21B 7/00, B01D 53/86, C10K 1/12

(54) **REDUCTION OF NOX EMISSION FROM COMBUSTING BLAST FURNACE GAS**

(71) Applicant: Danieli Corus BV, 1951 ME Velsen Noord (NL)
(72) Inventor: Klut, Pieter Dirk, c/o 1951 ME Velsen Noord (NL); Herold, Ruud, c/o 1951 ME Velsen Noord (NL)
(74) Representative: De Vries & Metman

(57) **Abstract**

Plant and process for the reduction of NOx emission from the combustion of blast furnace gas. The blast furnace gas passes a hydrolysis reactor (11, 25, 36), such as a radial flow reactor, with a catalytic bed for the hydrolysis of HCN. Subsequently, the blast furnace gas is scrubbed with a scrubber medium for ammonia, such as an absorbent, e.g., water or an adsorbent, e.g., activated carbon.

## Description

The invention relates to a process and a plant for processing blast furnace gas, in order to reduce NOx emission resulting from combusting the blast furnace gas.

Blast furnace gas is a by-product of this process. Blast furnace gas is typically composed of about 50-60% nitrogen, 18-24% carbon dioxide, 18-24 % carbon monoxide, and 2-4% hydrogen. The highly pressurized blast furnace gas can be used in a top-gas-pressure recovery turbine (TRT), which can generate electrical energy up to 35 kWh/t of pig iron without burning any fuel.

A high water content in the blast furnace gas can negatively affect the efficiency of the TRT. Due to the higher net gas volume, dry type TRTs can generate more power than wet type TRT.

The blast furnace can also be used as a fuel in heaters, boilers and power plants. In some cases it is mixed with coke oven gas before combustion. In other cases, blast furnace gas is flared without generating heat or electricity.

Combustion or flaring of blast furnace gas results in substantial air pollution by NOx emission, i.e., nitrogen oxide and nitrogen dioxide. This is partly caused by the content of HCN - or prussic acid. The HCN content in blast furnace gas normally is about 50 - 500 mg/m³.

In the flow from blast furnace to power plant, the blast furnace gas is cleaned to reduce its dust content. This typically includes a first dedusting step in a dust catcher, usually a cyclone, followed by wet scrubber or a bag filter station. Although wet scrubbers do also scavenge some of the acidic constituents, it does not sufficiently reduce the HCN content. Because of its use as a fuel, measures to remove the HCN from blast furnace gas should not be done at the cost of a high pressure drop or the use of expensive chemicals.

EP 3 370 853 teaches to reduce HCN content of blast furnace gas by injecting lime powder into the blast furnace gas flow. This should absorb the HCN and other acidic constituents. It was found that this results in only limited HCN reduction.

The object of the invention is to find a more effective manner for reducing NOx emission emanating from the combustion of blast furnace gas.

The object of the invention is achieved with a process for the treatment of blast furnace gas, wherein:
- in a hydrolysis step the blast furnace gas passes a hydrolysis reactor with a catalytic bed for the hydrolysis of HCN, and
- in a subsequent scrubbing step the blast furnace gas is scrubbed with an scrubber medium for ammonia, such as an absorbent, e.g., water or an adsorbent, e.g., activated carbon;
- in a next step the blast furnace gas is combusted.

In the first step the HCN is converted to ammonia (NH3), which is subsequently absorbed in the second step. Since ammonia is much easier to absorb than HCN, the HCN content can be substantially more reduced.

In this respect it is noted that WO 2004/105922 discloses a multi-step process for the removal of a number of contaminants from a syngas stream, including a hydrolysis step to reduce the HCN content. The complex process of this prior art publication is primarily designed for syngas containing a variety of sulphur compounds. For the hydrolysis step, the water/steam content should be above 10 vol.%. Surprisingly, it was found that the process of the present invention results in significant reduction of HCN content, without the need to add water to promote hydrolysis.

Optionally, the temperature of the blast furnace gas can be measured before the hydrolysis step and, if the temperature is below a threshold value, the blast furnace gas can be heated to a pre-set hydrolysis temperature. To this end, a pre-heater can be used upstream of the hydrolysis reactor. The pre-set hydrolysis temperature can for example be at least 150°C, e.g., at least 180°C.

In a specific embodiment, the scrubber medium is free of amines.

In a specific embodiment, the blast furnace gas is first passed through a dust catcher, such as a cyclone, before entering the hydrolysis reactor, to minimize the risk that the hydrolysis reactor will be clogged by dust.

Good results are obtained if the scrubbing step takes place in one or more wet scrubbers downstream of the hydrolysis reactor and the blast furnace gas subsequently passes a demister.

Alternatively, the scrubbing step can take place in one or more dry scrubbers downstream of the hydrolysis reactor. The blast furnace gas can subsequently pass a gas conditioning tower, and subsequently a further scrubber, in particular a dry scrubber such as a filter station with bag filters. Optionally, acidified water is sprayed into the blast furnace gas passing through the gas conditioning tower.

Optionally, the hydrolysis reactor is positioned between the dust catcher and a downstream scrubber, e.g., one or more wet scrubber and/or one or more dry scrubbers, such as one or more bag filter stations. In this short section of the blast furnace gas flow path the flow of the blast furnace gas can be as high as bout 8.10⁵ Nm³/h, so the residence time is very short. The temperatures are lower (about 110 - 150°C) than normally used for catalysed HCN hydrolysis (about 180 - 200°C). Notwithstanding these conditions it was surprisingly found that the HCN content could be reduced with more than 50 %.

Alternatively, the hydrolysis reactor can be placed downstream of one or more dry or wet scrubbers, e.g., upstream of a TRT with an ammonia scrubber downstream of the hydrolysis reactor and upstream or downstream of the TRT. The ammonia scrubber can comprise one or more wet scrubbers and/or one or more activated carbon beds.

Wet scrubbers for the removal of ammonia typically use acidified water, e.g., having a pH below 4.

The flow ratio L/G is e.g., at least 0,5 1/Nm3, e.g. at least 0,8 1/Nm3, where L is the flow of scrubber liquid and G is the flow of blast furnace gas. The flow ratio L/G may, e.g., be about 3 1/Nm3 or lower, e.g., about 2 1/Nm3 or lower.

Wet scrubbers are typically already present in the line-up of a blast furnace plant to reduce the dust content. Some blast furnace plants are designed to avoid wet scrubbing in order to minimize the moisture content of collected blast furnace gas. In such cases, one or more dry scrubbers can be used for the removal of dust particles, such as filter stations with bag filters. For the removal of ammonia, a wet scrubber can be used, e.g., downstream of the dry gas cleaning station. This scrubber can be relatively small.

In a specific embodiment, the process gas flowing from the hydrolysis reactor subsequently passes a gas conditioning tower, and subsequently a dry scrubber, such as a filter station with bag filters. Gas conditioning towers are designed to condition process gas by creating a uniform downward gas flow, substantially without swirls and vortices. This results in a gas with a uniform temperature and moisture content. Consequently, conditioning towers are voluminous to facilitate long residence times, and have a top inlet and bottom outlet to facilitate a straight downward flow. The flow of the blast furnace gas is typically about 10⁵ - 8.10⁵ Nm³/h. To obtain the desired residence time of the blast furnace gas in the conditioning tower (typically about 3 - 8 seconds) with such flows, the volume of the tower between the nozzles and the outlet of the tower may for example be in the range of 80 to 1800 m3.

Optionally, acidified water is sprayed into the blast furnace gas flow passing through the gas conditioning tower. In that case, a separate wet scrubber for the removal of ammonia can be dispensed with. The conditioning tower can be dimensioned to provide a residence time with a given maximum flow which is sufficient to allow full evaporation of droplets, e.g., with minimization of wall contact.

Optionally, a gas conditioning tower can be used which is upstream of the hydrolysis reactor. In such a case, a wet or dry ammonia scrubber can be used downstream of the hydrolysis reactor.

In order to minimize pressure drop, the hydrolysis reactor can be a radial flow reactor. Radial flow reactors are well known and generally comprise a domed cylindrical shell with a process gas inlet and a process gas outlet. A central perforate distributor or collector, which is typically cylindrical, is connected to the inlet or outlet and extends along the longitudinal axis of the vessel from one end towards the other to provide a central void to which or from which a process gas may flow. A peripheral void, which may be continuous or discontinuous, is also provided from which or to which a process fluid may flow to the outlet or inlet. A catalyst bed is provided between the central and peripheral voids. In a centripetal configuration, a process gas entering the vessel through the inlet passes to the peripheral void, then radially inwards through the catalyst bed to the central void, and then from the central void to the outlet. In an alternative centrifugal configuration, the process fluid entering the vessel through the inlet may pass to the central void, then radially outwards through the bed of catalyst to the peripheral void, and then from the peripheral void to the outlet. An example of such a vessel is disclosed in US 4,374,094.

Alternatively, the reactor can be a pancake reactor or similar reactor with a large surface area at the entrance and a low bed depth.

The catalytic bed may for example comprise TiO2 based catalysts, which were found to be very effective. Examples of commercially available TiO2-based catalysts include CRI-KL7231 of Shell and CRS31 of Axens. Alternatively, or additionally, catalysts can be used based on alumina and/or chromium-oxide, e.g., CrA1203 catalysts, such as ActiSorb^{®} 410 of Clariant.

The contact time of the process gas and the catalytic bed can for example be at least about 10 sec, e.g., at least 20 sec, e.g., at least about 30 sec, e.g., 30 - 40 sec, e.g., 35 - 37 sec.

The temperature in the hydrolysis reactor can for example be below 200°C, e.g., below 180°C , e.g., below 150°C, e.g., at least about 110°C. Optionally, a pre-heater can be used to heat the process gas before it enters the hydrolysis reactor.

The pressure can for example be about 2 - 4 barg, e.g., about 3 barg. The pressure drop over the reactor can for example be at most 0,1 bar, e.g., at most 0,05 bar. The bed volume of the catalytic bed can for example be about 200 - 300 m3, depending on the gas flow and the desired contact time.

The process can be carried out in a blast furnace plant comprising a furnace and a hydrolysis reactor, such as a radial flow reactor, downstream of the furnace, e.g., downstream of a dust catcher, such as a cyclone. The plant may further comprise a scrubber and/or a conditioning tower downstream of the hydrolysis reactor.

The invention is further explained with reference to the accompanying drawings showing exemplary embodiments.
Figure 1: schematically shows a blast furnace plant;
Figure 2: shows an alternative embodiment of a blast furnace plant with dry scrubbing.

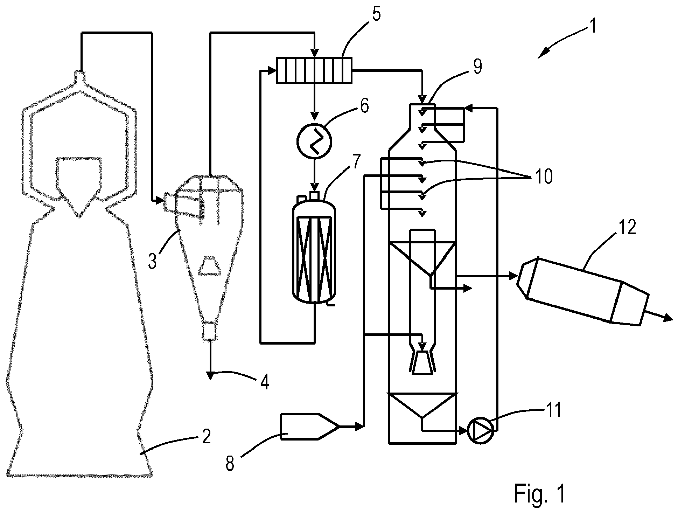

Figure 1 shows a blast furnace plant 1 according to the invention. The plant 1 comprises a blast furnace 2. Here, cokes, ores, and limestone are continuously supplied through the top of the blast furnace 2, while a hot blast of air is blown into the lower section of the blast furnace 2 through a series of tuyeres (not shown). The end products are molten metal and slag phases tapped from the bottom of the blast furnace 2, and raw blast furnace gas exiting from the top of the blast furnace 2. This blast furnace gas is combustible and cleaned and collected as a fuel gas. To this end, the raw blast furnace gas is first transferred from the blast furnace 2 to a dust catcher 3 separating larger dust particles. Dust is discharged at a lower end 4 of the dust catcher 3, while de-dusted blast furnace gas is discharged from an upper end of the dust catcher 3 and transferred to a radial flow reactor 7, optionally via a heat exchanger 5 and/or a pre-heater 6. The radial flow reactor 7 comprises a catalytic bed for catalysing hydrolysis of HCN. Here, the HCN is at least partly converted to ammonia (NH3). The NH3-containing blast furnace gas is subsequently returned as a counterflow to the heat exchanger 5 to heat up the flow going to the radial flow reactor 7. Next, the NH3-containing blast furnace gas is fed into a wet scrubber 9 connected to a supply 8 for water which is sprayed by a series of nozzles 10 into the blast furnace gas flow passing the wet scrubber 9. Part of the scrubber water is collected at the bottom of the scrubber 9 and recycled to the top of the scrubber 9 via a recirculation loop 10. The ammonia is absorbed by the aqueous scrubber liquid. The scrubbed blast furnace gas is subsequently transferred to a demister 12 for reducing the free water droplet content. The cleaned blast furnace gas can then be collected as a combustible fuel. Part of the scrubber liquid is sent to an effluent treatment plant.

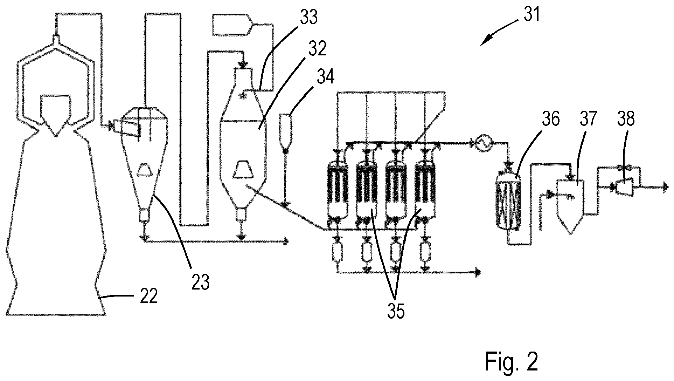

Figure 2 shows an alternative embodiment of a blast furnace plant 31. Same reference numbers are used for parts that are identical to corresponding parts in the embodiment of Figure 1. Downstream of the dust catcher 3 is a conditioning tower 32 with a water sprayer 33 for cooling the gas flow in case of temperature fluctuations or peaks. Optionally, an absorbent can be injected into the gas flow coming from the gas conditioning tower by means of an injector 34. Downstream of the gas conditioning tower 32 is a gas cleaning section with a set of parallel bag filter stations 35 forming a dry scrubber. Filtered blast furnace gas flows from the bag filter stations 35 to a radial flow hydrolysis reactor 36 and subsequently to an ammonia scrubber 37, which be a wet scrubber or an activated carbon bed. The ammonia scrubber 37 is upstream of a TRT 38 for recovery of energy from the blast furnace gas flow. Optionally, if the scrubber is an activated carbon bed or similar dry scrubber, it can be placed downstream of the TRT 38.

### Example

A sample of blast furnace gas was collected from the Tata Steel blast furnace in IJmuiden, the Netherlands, at a point downstream of a dust catcher and upstream of a wet scrubber. The blast furnace gas comprised 6 vol% H2, 26,3 vol% CO, 37,5 vol% N2, 25,1 vol% CO2 and 5 vol% H2O (analysed using a Gasmet DX4000 FTIR gas analyser). The measured HCN content was 45 ppmV. The sampled blast furnace gas was pressurized (about 2 barg) and heated to a temperature of 180 °C and subsequently fed into a hydrolysis reactor with a catalytic bed filled with a TiO2 based catalyst.

The residence time of the blast furnace gas in the hydrolysis reactor was about 0,2 - 2 seconds. The treated blast furnace gas was analysed and had a HCN content of about 20 ppmV.

The 50% reduction of HCN content of the blast furnace gas results in a reduction of NOx emission of 30 - 40 vol% when the blast furnace gas is combusted.

## Claims

1. Process of treatment of blast furnace gas, wherein:
- in a hydrolysis step the blast furnace gas passes a hydrolysis reactor (5, 36) with a catalytic bed for the hydrolysis of HCN, and
- in a subsequent scrubbing step the blast furnace gas is scrubbed with an scrubber medium for ammonia, such as an absorbent, e.g., water or an adsorbent, e.g., activated carbon;
- in a next step the blast furnace gas is combusted.

2. Process according to claim 1, wherein before the hydrolysis step the temperature of the blast furnace gas is measured and, if the temperature is below a threshold value, the blast furnace gas is heated to a pre-set hydrolysis temperature.

3. Process according to claim 2, wherein the pre-set hydrolysis temperature is at least 150°C, e.g., at least 180°C.

4. Process according to any one of the preceding claims, wherein the scrubber medium is free of amines.

5. Process according to any one of the preceding claims, wherein the blast furnace gas is passed through a dust catcher (3), such as a cyclone, before entering the hydrolysis reactor (5, 36).

6. Process according to claim 5, wherein the scrubbing step takes place in one or more wet scrubbers (6, 37) downstream of the hydrolysis reactor (5, 36) and the blast furnace gas subsequently passes a demister (9).

7. Process according to claim 5, wherein the scrubbing step takes place in one or more dry scrubbers (35) downstream of the hydrolysis reactor (5).

8. Process according to claim 7, wherein the blast furnace gas subsequently passes a gas conditioning tower (32), and subsequently a further scrubber, in particular a dry scrubber such as a filter station (35) with bag filters.

9. Process according to claim 8, wherein acidified water is sprayed into the blast furnace gas passing through the gas conditioning tower (32).

10. Process according to any one of the preceding claims, wherein the hydrolysis reactor (5, 36) is a radial flow reactor.

11. Process according to any one of the preceding claims, wherein the catalytic bed comprises one or more TiO2-based catalysts and/or one or more A1203 catalysts, e.g., CrA1203 catalysts.

12. Blast furnace plant comprising:
- a furnace;
- a hydrolysis reactor (5, 36), such as a radial flow reactor, with a catalytic bed for the hydrolysis of HCN, downstream of the furnace;
- at least one scrubber downstream of the hydrolysis reactor, the scrubber being configured to contact the blast furnace gas with a scrubber medium for ammonia.

13. Blast furnace plant according to claim 12, further comprising a dust catcher (3), such as a cyclone, wherein the hydrolysis reactor is downstream of the dust catcher.

14. Blast furnace plant according to claim 12 or 13, comprising a conditioning tower (32) downstream of the hydrolysis reactor.
